# FASCICULE DE BREVET EUROPEEN

(11) **EP 2 548 821 B1**
(45) Date de publication et mention de la délivrance du brevet: **26.02.2014**
(21) Numéro de dépôt: 12161062.0
(22) Date de dépôt: 16.08.2010
(51) Int. Cl.: B65G 1/04, B65G 1/137

(54) **Système de stockage et de délivrance de boites parallelépipèdiques telles que des boites de médicament**
Lager- und Ausgabesystem von quaderförmigen Schachteln, wie Medikamentenschachteln
System for storing and delivering parallelepiped boxes, such as medicine boxes

(30) Priorité: 20.08.2009 FR 0904015
(43) Date de publication de la demande: 23.01.2013
(62) Demande divisionnaire de: 10757237.2
(73) Titulaire: Intecum, 20600 Bastia (FR)
(72) Inventeur: Sallembien, Jean-Nöel, 20200 Bastia (FR)
(74) Mandataire: Maupilier, Didier

(56) Documents cités:
- EP-A1- 1 806 302
- WO-A1-01/23281
- DE-A1- 19 941 640

## Description

### Domaine technique

La présente invention concerne les dispositifs automatisés de stockage et de délivrance de boîtes parallélépipédiques de l'arrivée dans les bacs de commande à la délivrance au poste de vente et concerne en particulier un dispositif de stockage et de délivrance de boîtes de médicaments à l'usage des pharmacies.

### État de la technique

Les pharmacies sont aujourd'hui équipées de systèmes automatiques de délivrance de médicaments qui permettent aux pharmaciens d'éviter des va-et-vient incessants pour chercher manuellement chaque boîte de médicament. Ces systèmes leur permettent de gagner du temps sur des tâches répétitives et laborieuses et sont rentabilisés rapidement. Les systèmes automatiques de délivrance prennent en charge le stockage des médicaments. Une unité de commande reliée à l'ordinateur de contrôle du pharmacien permet de transmettre un ordre de délivrance au système. Le stockage des médicaments peut être manuel mais certains systèmes proposent un module de chargement automatique.

Les systèmes actuels sont volumineux et ont tous une hauteur égale à la hauteur sous plafond. Ils sont composés d'un volume de stockage composé de deux rangées d'étagères entre lesquels un bras robot se déplace. Le bras prolongé d'une pince place les médicaments par catégorie selon un programme. La pince est munie généralement d'une ventouse qui permet d'extraire la boîte demandée. La ventouse ne permet pas d'extraire les boîtes volumineuses. Les robots gèrent et sécurisent les stocks. Les boîtes de médicaments sont rangées en fonction de leur volume, et la réception de la commande est vérifiée par une communication avec le logiciel de gestion des stocks.

Les systèmes existants présentent l'inconvénient que la gestion du stockage et les moyens de saisie des boîtes sont privilégiés au détriment de la compacité du stockage. En outre, les systèmes actuels de stockage comportent beaucoup d'espace vide, donc perdu, entre les boîtes de médicament.

DE 199 41640 A1 décrit un dispositif correspondant au préamble de la revendication 1.

### Exposé de l'invention

C'est pourquoi le but de l'invention est de pallier cet inconvénient en proposant un système de stockage capable d'extraire et de livrer toutes sortes de boîtes parallélépipédiques telles que des boîtes de médicament de façon automatique tout en laissant le moins d'espace libre entre les boîtes de façon à optimiser l'espace de stockage.

L'objet de l'invention est donc un dispositif de stockage et de délivrance de boîtes parallélépipédiques tel que revendiqué dans la revendication 1 ainsi que la méthode revendiquée dans la revendication 13.

Le moyen de chargement comprend une première partie en forme de V orientée vers le haut et comportant deux plans inclinés montants définissant une arête, les boîtes parallélépipédiques étant placées en pile dans la première partie de manière à ce que les arêtes de plus petite dimension de chaque boîte parallélépipédique soient parallèles à l'arête définie par les plans inclinés et un doigt de poussée adapté pour retenir les boîtes parallélépipédiques introduites dans le moyen de chargement. Il comprend en outre des moyens de détection permettant de détecter lorsqu'une boîte parallélépipédique arrive à l'extrémité haute de la première partie du moyen de chargement et de stopper le déplacement du doigt de poussée et par conséquent le déplacement des boîtes parallélépipédiques, et des moyens de lecture tels qu'un moyen optique de manière à lire directement les informations inscrites sur les trois faces visibles de la boîte parallélépipédique se trouvant à l'extrémité haute de la pile dans le but d'enregistrer le code de la boîte parallélépipédique.

### Description brève des dessins

Les buts, objets et caractéristiques de l'invention apparaîtront plus clairement à la lecture de la description qui suit faite en référence aux dessins dans lesquels :
La figure 1 représente une vue schématique de l'ensemble du système selon l'invention,
La figure 2 représente une vue schématique de la cartouche de chargement des boîtes de médicament dans le système selon l'invention,
La figure 3 représente une vue schématique du moyen de chargement du module de chargement,
La figure 4 représente l'intérieur d'un module de chargement,
La figure 5 représente une coupe de la pince de réception de la boîte de médicament,
La figure 6 représente en détail la pince,
La figure 7 représente l'actionnement de la pince,
La figure 8 représente une coupe du robot,
La figure 9 représente le module de délivrance selon l'invention,
La figure 10 représente un exemple de réalisation de meuble de comptoir et du module de délivrance selon l'invention.

### Description détaillée de l'invention

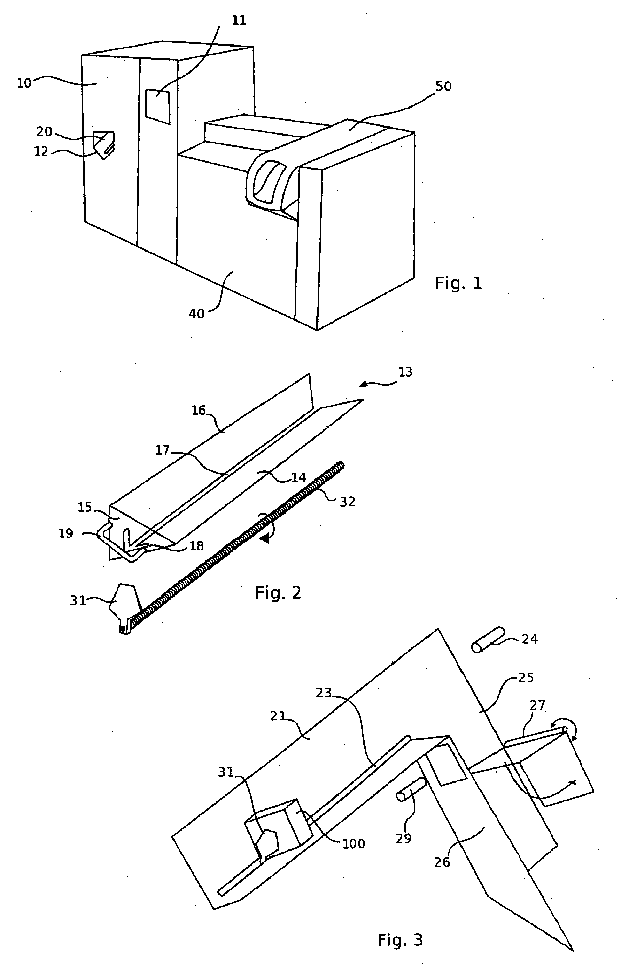

Le système selon l'invention est composé de trois parties différentes représentées sur la figure 1. La première partie est un module de chargement 10 par où entrent les boîtes de médicament. La seconde partie est un meuble comptoir 40 comportant au moins un module de stockage dans lequel les boîtes sont stockées et la troisième partie est un module de délivrance 90 par où sortent les boîtes afin d'être délivrées. Le caractère modulable du système permet de prévoir un ou plusieurs modules de stockage par exemple selon les besoins et la capacité de la pharmacie. De préférence les modules de chargement et de stockage sont situés l'un à côté de l'autre tandis que le module de délivrance est situé sur le module de stockage. Le module de stockage contient les moyens de placement des boîtes dans le système. En général, le module de chargement contient l'ensemble des éléments électriques, électrotechniques et informatiques nécessaires au fonctionnement du système.

Le module de chargement présente en façade une interface utilisateur 11 telle qu'un écran tactile relié à un ordinateur de contrôle et de gestion du système. Cet ordinateur dispose d'un logiciel adéquat qui assure le contrôle des boîtes de médicament qui sont entrées dans le module de stockage et de celles qui en sont sorties pour être délivrées. L'ordinateur de contrôle comprend 2 bases de données
- La première base de données comprend la position de chaque boite sur chaque étagère du module de stockage et ce, de façon permanente, afin de savoir à la fois quels espaces sont disponibles pour introduire et ranger une nouvelle boite et pour permettre de déterminer où et quelle boite sera extraite lors d'une demande de délivrance comme on le verra par la suite.
- La seconde base de données comprend la référence des produits pharmaceutiques. Cette référence est appelée code CIP et se présente sous la forme d'une série de 7 chiffres commençant par le chiffre 3 pour ce qui concerne les produits soumis à une AMM (Autorisation de Mise sur le Marché), délivrée par le Ministère de la Santé dans la première colonne, le nom du produit dans la deuxième colonne, la longueur de la boite concernée en troisième colonne, la largeur en quatrième et la hauteur de la boite concernée en cinquième colonne.

L'ordinateur de contrôle et de gestion du système est également relié à au moins un poste informatisé destiné au pharmacien qui veut livrer les médicaments mentionnés sur une ordonnance à partir d'un comptoir. Pour plus de commodités, chaque poste informatisé peut être couplé à un module de stockage.

Le module de chargement dispose d'une ouverture 12 par laquelle les boîtes de médicament entrent. L'introduction des boîtes de médicament se fait par l'intermédiaire d'une cartouche de chargement 13 indépendante du module et représentée en détail sur la figure 2. La cartouche 13 est un support long et rectiligne, ouvert comme une gouttière mais de section en forme de V. Elle comporte deux plans principaux 14 et 16 de préférence perpendiculaires entre eux mais non jointifs sur une grande partie de la cartouche de manière à disposer d'une fente longitudinale 17 le long de leurs grands côtés situés à l'arête du V. Les deux plans 14 et 16 sont reliés par au moins un de leur petit côté selon un plan 15 en forme de triangle et dont la face externe est munie d'une poignée de manipulation 19. A noter qu'à l'extrémité de la cartouche, du côté de la poignée, la fente 17 est prolongée d'une fente transversale 18 située sur une partie des plans 14 et 15 de façon à ce que la partie fendue de la cartouche soit en forme de T

Les boîtes de médicament, de forme parallélépipédique sont disposées manuellement dans la cartouche les unes derrière les autres de façon aléatoire. Le caractère aléatoire signifie ici qu'il n'est pas nécessaire de ranger les boîtes dans la cartouche selon leur taille ou selon leur type. Cependant, les boîtes de médicament sont rangées dans la cartouche de la façon suivante. Chaque boîte a 3 dimensions L1, L2, L3 telles que L1<L2<L3. Elle est rangée dans la cartouche de manière à ce que les arêtes de plus grande dimension L3 soient perpendiculaires à l'arête de la cartouche et à ce que les arêtes de plus petite dimension L1 soient parallèles à l'arête de la cartouche. Cette disposition permet de mettre le plus grand nombre possible de boîtes dans la cartouche En outre, une grande face de la boîte où se trouve la vignette et le code fait face au haut de la cartouche, ce qui présente un grand intérêt comme on le verra par la suite.

Une fois remplie de boîtes de médicament, la cartouche 13 est introduite entièrement par l'ouverture 12 du module de chargement 10 dans un moyen de chargement 20 représenté sur la figure 3, en glissant le long d'une rampe inclinée vers le haut, en forme de V, épousant exactement la forme de la cartouche. L'arête fendue de la cartouche permet à un doigt de poussée 31 du moyen de chargement d'être inséré dans la fente transversale 18 à l'avant de la première boîte de médicament. La pile de boîtes de médicament est alors retenue par le doigt de poussée 31, ce qui permet à la cartouche 13 d'être retirée.

Le moyen de chargement 20 est un ensemble de pièces mécaniques situées dans le module de chargement qui acheminent les boîtes de médicament depuis l'ouverture 12 jusqu'au module de stockage 50. Il est composé de deux parties, une première partie orientée vers le haut et une seconde partie orientée vers le bas à la façon d'un accent circonflexe; les deux parties étant reliées entre elles par un coude schématiquement représenté par la « pointe » de l'accent. La figure 3 ne montre comme exemple qu'une seule boîte de médicament 100 retenue par le doigt de poussée 31. Mais en général, c'est un ensemble de plusieurs boîtes de médicament qui est introduit à chaque fois.

Le dispositif de chargement est composé dans sa partie inclinée vers le haut d'un support long et rectiligne ouvert comme une gouttière mais de section en forme de V et dont les dimensions coïncident avec celles de la cartouche 13. Plus précisément, la première partie du dispositif de chargement est composée de deux plans inclinés montants 21 et 22 perpendiculaires entre eux et faisant un angle d'environ 45° avec le plan horizontal. Les 2 plans 21 et 22 sont non jointifs sur une grande partie de manière à disposer sur une grande portion de l'arête 23 du V d'une fente le long de leurs grands côtés coïncidant avec la fente 17 de la cartouche 13.

Comme illustré sur la figure 2, le doigt de poussée 31 est mû par l'intermédiaire d'une vis sans fin située sous l'arête du V et permettant de faire glisser le doigt de poussée vers le haut le long des plans définis par le V. Ainsi, le doigt de poussée coulisse le long de la fente 23 en poussant l'ensemble des boîtes de médicament 100 sur les plans inclinés montants 21 et 22.

Selon une caractéristique essentielle de l'invention, des moyens de détection tels que des moyens mécaniques ou des moyens électroniques permettent de détecter lorsqu'une boîte arrive à l'extrémité haute de la première partie du moyen de chargement, c'est-à-dire la boîte qui se trouve en haut de la pile de boîtes dans le moyen de chargement. Cette détection stoppe le déplacement du doigt de poussée 31 et par conséquent le déplacement des boîtes de médicament. Des moyens de lecture du code de la boîte comprenant un premier moyen optique 24 tel qu'une caméra placée en avant, au dessus et sur le côté de la boîte prennent alors une photo ou lisent directement les informations inscrites sur les trois faces visibles de la boîte. Le code de la boîte se trouve généralement sur la grande face avant de la boîte et est donc lu par les moyens de lecture. Si par hasard, il se trouve sur une des 2 autres faces visibles, il sera lu également.

Dans une variante de réalisation, le haut des plans inclinés montants 21 et 22 est une vitre transparente et un système de miroirs permet aux moyens de lecture, par exemple la caméra 24, de lire le code qui se trouve sur l'une des 2 faces placées contre la partie transparente des plans 21 et 22, l'image du code étant renvoyée par les miroirs vers les moyens de lecture.

Les données lues ou reçues par le premier moyen optique sont envoyées à l'ordinateur de contrôle afin de déterminer le type de boîte de médicament dont il s'agit et de déterminer en particulier le code correspondant à l'identification française normalisée des médicaments (code C.I.P. de 7 ou 13 chiffres). L'ordinateur de contrôle, grâce à un logiciel approprié et à la base de données de référence, établit une correspondance entre le code lu de chaque boîte de médicament entrant dans le système et les dimensions de la boîte de médicament auxquelles il correspond c'est à dire aux dimensions L1, L2 et L3 de la boîte.

Après lecture ou prise de photos de la boîte, le mouvement du doigt de poussée reprend jusqu'à ce que la boîte concernée dépasse le coude du dispositif de chargement. A ce moment là, la boîte arrive dans la seconde partie du V de chargement. Cette seconde partie située dans la continuité de la première est inclinée vers le bas à la façon d'un toboggan. Elle forme donc un support long et rectiligne ouvert comme une gouttière de section également en forme de V et composée de deux plans inclinés descendants 25 et 26 perpendiculaires entre eux dans la continuité respectivement des plans 21 et 22. Arrivée dans la seconde partie, la boîte glisse d'elle-même vers le bas jusqu'à une guillotine 27. Là, un second moyen optique 29 prend une photo ou lit directement le code de la face de la boîte qu'il a dans sa visée c'est-à-dire de la face qui se trouvait contre la boîte située en dessous ou contre le doigt de poussée s'il s'agit de la dernière boîte lors de la montée dans la première partie du V de chargement et qui n'a pas été vue par le premier moyen optique. Le second moyen optique permet donc d'identifier le code CIP de la boîte au cas où l'identification par le premier moyen optique ou par les miroirs n'a pas pu être faite.

L'ensemble composé des premiers et seconds moyens optiques, des miroirs, du logiciel traitant les données lues et établissant l'identification de la boîte par son code C.I.P. constitue le moyen de lecture du code de la boîte.

Lorsque la boîte a été identifiée, la guillotine 27 s'ouvre pour libérer la boîte qui glisse jusqu'en bas de la seconde partie du dispositif de chargement et débouche dans le module de stockage. La boîte est réceptionnée dans la pince de réception d'un des deux robots du module de stockage.

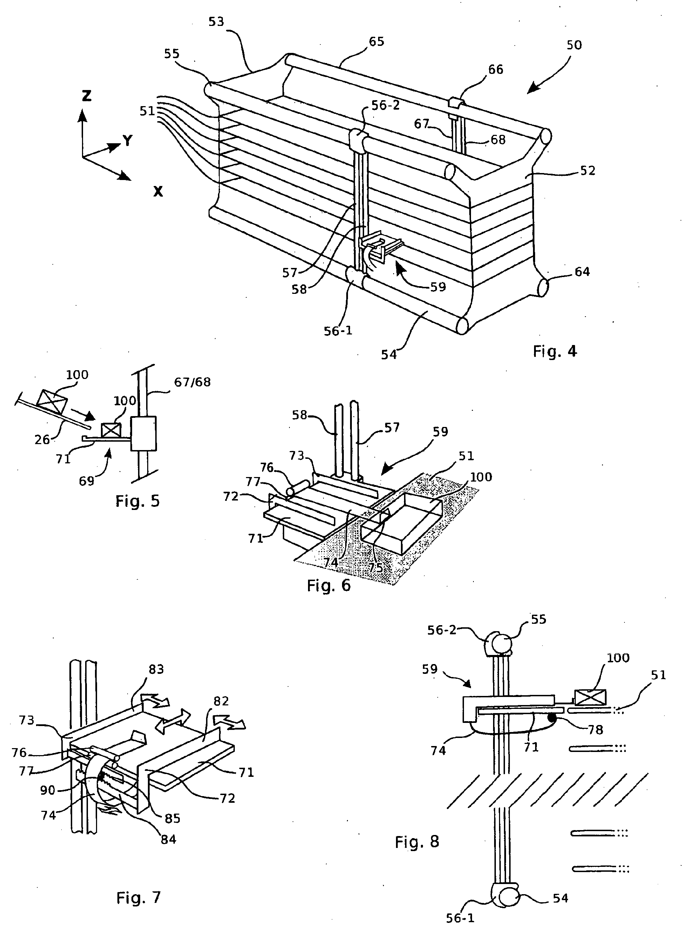

Sur la figure 4 sont représentés les principaux éléments contenus dans le meuble de comptoir 40 dont on a enlevé les parois extérieures et qui constituent ensemble le module de stockage 50. Le module de stockage se compose d'un ensemble d'étagères 51 de forme rectangulaire fixées par deux de leurs côtés opposés, de préférence les deux petits côtés, à deux plaques verticales d'extrémité 52 et 53. Les deux plaques d'extrémité sont reliées également par leurs quatre coins par quatre rails de guidage longitudinaux 54, 55, 64 et 65 montés parallèles entre eux. Les deux rails supérieurs 55 et 65 sont situés au dessus de la plus haute étagère tandis que les rails inférieurs 54 et 64 sont situés au dessous de l'étagère la plus basse. Deux par deux, les rails de guidage longitudinaux 54 et 55 sont reliés par des rails parallèles transversaux 57 et 58 d'un côté, et les rails de guidage longitudinaux 64 et 65 sont reliés par des rails parallèles transversaux 67 et 68 de l'autre côté. Les rails de guidage transversaux 57 et 58 sont montés coulissants sur les rails de guidage 54 et 55 respectivement par les éléments coulissants 56-1 et 56-2. Les rails de guidage transversaux 67 et 68 sont montés coulissants sur les rails de guidage 64 et 65 respectivement par les éléments coulissants 66 (un seul est visible sur la figure). Si on définit un espace selon trois axes orthogonaux X, Y, Z, où Z est l'axe vertical et si les étagères 51 sont définies dans cette espace par des équations de type Z=k où k est une constante, le plus grand côté des étagères étant définit selon l'axe X, alors les rails de guidage longitudinaux 54, 55 sont dirigés selon l'axe Y et les rails de guidage transversaux sont dirigés selon l'axe X.

Une pince 59 ou 69 coulisse respectivement le long de chaque paire de rails de guidage transversaux 57 et 58 ou 67 et 68. Sur la figure 4, seule la pince 59 coulissante le long des rails 57 et 58 est visible. Une des deux pinces, ici la pince 69, fait office de pince de réception et est schématiquement représentée en coupe sur la figure 5. La pince de réception 69 est située en bas du toboggan formé par le seconde partie du dispositif de chargement de façon à ce que lorsque la boîte de médicament 100 parvient en glissant à l'extrémité du plan incliné descendant 26 elle arrive directement dans un plateau support 71 solidaire de la pince de réception 69 située dans le module de stockage.

La pince 59 est représentée en détail sur la figure 6. Elle est identique à la pince 69. La pince 59 (et le plateau support 71) coulisse grâce à un moteur (non montré) commandé par l'ordinateur de contrôle le long des rails parallèles 57 et 58. A noter que la pince 59 est placée préalablement devant la rangée dans laquelle doit être placée la boîte de médicament en faisant coulisser les éléments coulissants 66 sur les rails longitudinaux 54 et 55 grâce à un moteur (non montré) commandé par l'ordinateur de contrôle. Ainsi, les rails de guidage longitudinaux 54 et 55 permettent de déplacer la pince selon l'axe X afin de se déplacer le long d'une même étagère tandis que les rails de guidage transversaux permettent de déplacer la pince selon l'axe Z afin d'atteindre n'importe quelle étagère. La pince 59 comporte deux bras de pincement 72 et 73, un ruban métallique 74 muni à son extrémité d'une butée 75. Le ruban 74 est placé entre deux rouleaux d'entraînement 76 et 77 maintenus pressés l'un contre l'autre et situés sur le côté libre du plateau support 71. Le côté opposé du plateau support est tangent à l'étagère 51.

La figure 7 montre plus en détail l'actionnement des bras de pincement 72 et 73 qui comportent chacun une mâchoire 82 ou 83 solidaire respectivement d'une partie crantée 84 ou 85. Les deux parties crantées 84 et 85 sont en prise avec une roue crantée 90 de façon à ce que la rotation de cette roue resserre ou écarte simultanément les mâchoires 82 et 83. Sous la commande de l'ordinateur de contrôle et de gestion, un moteur permet la rotation de la roue crantée et par conséquent le mouvement latéral des mâchoires sur le plateau support 71 de la pince tandis qu'un autre moteur entraîne un des rouleaux 76 ou 77 afin d'enrouler ou dérouler le ruban 74 selon un mouvement transversal sur le plateau support 71 de la pince.

L'ensemble mobile composé des éléments coulissants 56-1 et 56-2, de ses 2 rails verticaux 57, 58, de la pince coulissante 59 et des éléments solidaires de la pince et décrits en référence aux figures 6 et 7, constitue un premier robot du système. L'ensemble identique mais situé de l'autre côté des étagères, composé des éléments coulissants 66-1 et 66-2, des 2 rails de guidage verticaux 67, 68, de la pince coulissante 69 et des éléments solidaires de la pince et décrits en référence aux figures 6 et 7 constitue un second robot du système. Les deux robots constituent les moyens de saisie et de transport du système selon l'invention. Chaque robot se situe le long d'une face interne du meuble comptoir où se trouvent les grands côtés des étagères.

Selon la figure 8 représentant un robot appelé ici robot de placement, vu en coupe schématisée, le ruban métallique 74 de la pince 59 est relié par son autre extrémité à un enrouleur 78 solidaire du plateau support 71 de façon à suivre le mouvement de celui-ci lorsque le robot se déplace le long des rails de guidage longitudinaux et transversaux.

Lorsque la boîte de médicament arrive dans la pince de réception 69, les deux bras de pincement 72 et 73 sont positionnés à une distance l'un de l'autre supérieure à la plus grande longueur de la boîte mais à une distance inférieure à la plus grande diagonale de façon à ce que la boîte se positionne bien entre les bras de pincement. Dès réception de la boîte, le ruban 74 est actionné afin de pousser la boîte sur une butée située au bord du plateau support 71 et non représentée sur les figures afin de mettre la boîte exactement dans le sens du rangement. De plus, dans cette position, les dimensions de la boîte sont vérifiées grâce aux positions des bras de pincement 72 et 73 et du ruban 74 par comparaison entre les valeurs obtenues et celles données par la première base de données. En cas de divergence entre ces valeurs, la pince 59 évacue la boîte dans un réceptacle idoine au lieu d'être stockée La pince est ensuite mise en mouvement sur ses rails de guidage le long des étagères 51 du module de stockage.

Les boîtes de médicament sont rangées une par une sur les étagères grâce au ruban 74 qui pousse la boîte hors du plateau support 71 de la pince jusqu'au bord de l'étagère en vis-à-vis tel que représenté sur les figures 6 et 8 afin de former des rangées de boîtes dans la profondeur des étagères c'est-à-dire selon l'axe Y. C'est l'ordinateur de contrôle qui commande l'actionnement des moteurs de la pince et qui gère le rangement des boîtes. Le rangement de la boîte se faisant en poussant la dernière boîte d'une rangée donnée, les boîtes d'une même rangée ne comportent pas de vide entre elles garantissant un espace de stockage maximal.

L'emplacement de chaque boîte est mémorisé et stocké dans la première base de données de l'ordinateur de contrôle et de gestion, ce dernier établissant, grâce à un logiciel approprié, une correspondance entre le type de la boîte de médicament stocké (dans notre exemple par son code CIP), son emplacement sur les étagères et ses dimensions. Le système fait en sorte que les boîtes de médicament identiques soient regroupées et placées côte à côte de façon à former des rangées remplies uniquement des mêmes boîtes de médicament. Cependant, lorsque le nombre de boîtes identiques ne suffit pas pour remplir une rangée entière, la rangée est complétée et remplie par d'autres boîtes de médicament. Dans ce cas, l'ordinateur choisit autant que possible des boîtes de médicament de format sensiblement identique au format de celles déjà présentes sur la rangée de façon à former des rangées de boîtes homogènes en taille et ainsi à laisser le moins possible d'espace non utilisé entre les rangées. De même, lorsque la boîte à ranger est unique et qu'il n'y a pas de boîtes identiques du même médicament dans le module de stockage, l'ordinateur choisit en premier de remplir une rangée vide, au cas où d'autres boîtes identiques suivraient. S'il n'y a pas de rangées vides, l'ordinateur choisit une rangée de boîtes de médicament de format sensiblement identique à celle à ranger.

Lorsqu'une commande pour la délivrance d'une boîte de médicament est passée sur un poste informatisé, l'ordinateur interroge sa première base de données donnant les emplacements des boîtes de médicament stockées dans le système et identifie l'emplacement de la boîte demandée. A noter que, comme on vient de le voir, une même rangée contient souvent des boîtes de médicament identiques. Les deux pinces 59 et 69 sont alors positionnées face à face et alignées sur la rangée où se trouve la boîte de médicament concernée. L'une des pinces, sert de pince de délivrance alors que l'autre pince sert de pince de poussée pour pousser les boîtes dans la rangée. Dans tous les cas, et en particulier lorsque la boîte demandée est placée à l'intérieur d'une rangée dans laquelle les boîtes sont différentes, l'ordinateur détermine laquelle des deux pinces sera la pince de délivrance en choisissant, de préférence, celle qui se trouve être la plus proche de la boîte demandée.

Lorsque la boîte demandée est en bout de rangée, la pince de poussée pousse la rangée de boîtes concernées d'une longueur égale à la longueur de la boîte voulue qui se trouve alors repoussée dans la pince de délivrance. La pince de délivrance enserre la boîte grâce à ses deux bras de pincement et vient se positionner devant le module de délivrance dont le poste a demandé la boîte concernée. Lorsque la boîte demandée ne se trouve pas en bout de rangée, la pince de poussée pousse la rangée de boîtes concernées d'une longueur égale à la longueur de la boîte se trouvant au bord de l'étagère de façon à ce qu'elle soit réceptionnée dans la pince de délivrance. La pince de délivrance, toujours sous la commande de l'ordinateur de contrôle, et en effectuant la même manoeuvre que précédemment, réceptionne la boîte en bout de rangée et la place à un autre emplacement des étagères en choisissant un emplacement proche au moins aussi grand que la boîte mais le moins grand possible pour optimiser la place, puis revient se placer devant la rangée de la boîte demandée. L'opération précédente recommence jusqu'à ce que la boîte demandée soit accessible. La pince de délivrance amène alors la boîte demandée devant le module de délivrance. Les deux pinces sont donc interchangeables dans le rôle de pince de délivrance.

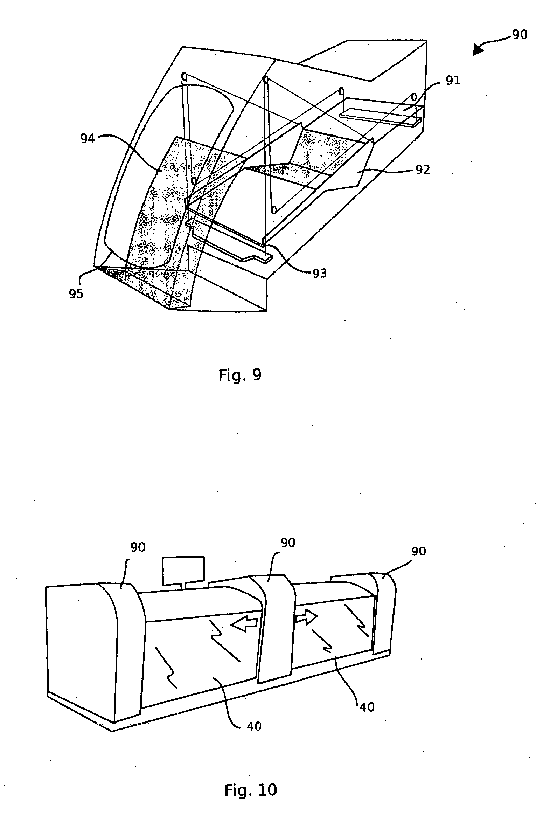

Le module de délivrance se présente extérieurement comme un caisson en métal ou d'un autre matériau. Il est représenté en transparence sur la figure 9. La forme du caisson est modulable de façon à s'adapter à toutes les configurations de pharmacie.

Lorsque la pince de délivrance munie de la boîte demandée arrive devant le module de délivrance, les deux bras de pincement 72 et 73 s'écartent l'un de l'autre afin de desserrer la boîte. Le ruban 74 entre en mouvement et pousse la boîte hors du plateau support 71 sur une surface lisse et inclinée 91. La boîte de médicament glisse sur cette surface jusqu'à atteindre une pièce montée pivotante munie d'un réceptacle 92 dans lequel elle s'arrête. La boîte est alors accessible au pharmacien. La pièce montée pivotante tourne autour d'un axe 93 jusqu'à une position inclinée où la boîte sort du réceptacle et glisse sur la paroi 94 d'une bouche de réception 95. L'entraînement de la pièce pivotante peut provenir d'un moyen motorisé indépendant ou bien d'un mouvement descendant de la pince de délivrance par un système de poulies et de câbles reliant la pièce pivotante et la pince.

Le module de délivrance est fixé sur les plaques verticales d'extrémité du module de stockage ou peut être fixé dessus. Le système dispose au moins d'un module de délivrance et peut comporter un poste informatisé par module de stockage.

De façon avantageuse, le meuble comptoir sous forme d'un meuble de seulement 1m de large de façon à optimiser l'espace. Chaque système selon l'invention peut contenir un ou plusieurs meubles de comptoir 40 mis bout à bout pour former un long comptoir et être séparés par un module de délivrance 90 comme représenté sur la figure 10.

Bien que le système qui vient d'être décrit est utilisé de préférence pour le stockage et la délivrance de boîtes de médicament, il va de soi qu'il pourrait être utilisé pour le stockage et la délivrance de boîtes parallélépipédiques, quel que soit leur contenu, de telles boîtes comportant un code définissant leur contenu sur une de leurs faces.

## Revendications

1. Dispositif (40) de stockage et de délivrance de boîtes parallélépipédiques (100), qui comporte :
- un moyen de chargement (10, 12, 20) des boîtes dans le dispositif,
- un module de stockage (50) à rangées traversantes parallèles pour stocker les boîtes,
- un moyen de placement (54 à 59, 64 à 69) de chaque boîte reçue par le moyen de chargement à un emplacement déterminé d'une des rangées et
- un moyen logiciel d'enregistrement dans une mémoire de l'emplacement où se trouve ladite boîte,
- un moyen de délivrance (91 à 95) des boîtes à l'extérieur du dispositif,
- un moyen de sélection d'une boîte déterminée comportant
un moyen logiciel de recherche en mémoire de l'emplacement de ladite boîte déterminée et
un moyen de saisie et de transport (54 à 59, 64 à 69) de ladite boîte vers le moyen de délivrance, et
- un moyen de commande du moyen de placement et du moyen de saisie et de transport,
ledit moyen de placement et ledit moyen de saisie et de transport comprenant un premier robot (56-1, 56-2, 57, 58, 59) et un second robot (66, 67, 68, 69) situés de part et d'autre du module de stockage, chacun le long de l'une des faces dudit module de stockage où débouchent l'une des extrémités des rangées du module de stockage,
le moyen de commande étant adapté
à commander au moins un desdits robots pour pousser les boîtes de la rangée où se trouve ladite boîte à délivrer et
à commander l'autre desdits robots pour recevoir ladite boîte à délivrer et la placer dans ledit moyen de délivrance; **caractérisé en ce que** lesdit premier et second robots comprennent chacun des pinces (59,69) et **en ce que**
lesdits premier et second robots sont adaptés pour se déplacer sous la commande dudit moyen de commande de manière à ce que les pinces (59, 69) de chacun desdits robots soient positionnées face à face et alignées sur la boîte parallélépipédique déterminée, l'une des pinces servant de pince de délivrance et l'autre pince servant de pince de poussée pour pousser les boîtes dans la rangée.

2. Dispositif selon la revendication 1, dans lequel le moyen de commande commande le replacement, par le robot de saisie et de transport, de chaque boîte poussée par l'autre robot, de placement, qui n'est pas la boîte déterminée dans une autre rangée que celle où ladite boîte poussée à été saisie.

3. Dispositif selon l'une des revendications 1 ou 2, dans lequel le moyen de placement est adapté à ranger chaque boîte reçue par le moyen de chargement dans une rangée qui n'est pas pleine de boîtes dont l'ouverture est au moins aussi grande que la boîte mais le moins grand possible pour optimiser la place des boîtes de médicament et former des rangées de boîtes de formats sensiblement identiques de façon à former des rangées de boîtes homogènes en taille et ainsi à laisser le moins possible d'espace non utilisé entre les rangées.

4. Dispositif selon l'une des revendications 1 à 3, dans lequel ladite pince de délivrance déterminée par ledit moyen de commande est la pince (59 ou 69) qui se trouve être la plus proche de la boîte parallélépipédique déterminée.

5. Dispositif selon l'une des revendications 1 à 4, dans lequel la pince de poussée (59 ou 69) est commandée par ledit moyen de commande pour pousser la rangée de boîtes concernées d'une longueur égale à la longueur de la boîte à saisir vers ladite pince de délivrance, cette dernière enserrant la boîte grâce à ses deux bras de pincement (72, 73) et se positionnant devant un module de délivrance (90) incorporant ledit moyen de délivrance.

6. Dispositif selon l'une des revendications 1 à 5, dans lequel au moins un robot adapté à pousser des boîtes comporte un ruban souple (74) muni, à son extrémité libre, d'une butée (75) exerçant la force de poussée sur ladite boîte.

7. Dispositif selon la revendication 6, dans lequel le ruban (74) est placé entre deux rouleaux d'entraînement (76, 77) maintenus pressés l'un contre l'autre et mis en mouvement par un moteur.

8. Dispositif selon l'une des revendications 1 à 7, dans lequel chacun desdits premier et second robots comprend une pince (59) composée d'un plateau support (71) pour supporter une boîte et deux bras de pincement (72, 73) pour maintenir ladite boîte.

9. Dispositif selon l'une des revendications 1 à 8, dans lequel le moyen de chargement comprend, en outre, des moyens de lecture d'informations inscrites sur l'une des faces de chaque boîte introduite dans le moyen de chargement, le moyen logiciel d'enregistrement étant adapté à associer des données représentatives des informations lues à l'emplacement mémorisé de ladite boîte.

10. Dispositif selon l'une des revendications 1 à 9, comprenant en outre un ordinateur de contrôle et de gestion du système ayant en mémoire une première base de données mémorisant la position de chaque boite de médicament rangée sur chaque étagère dudit module de stockage (50) de façon à connaître à la fois quels espaces sont disponibles pour introduire et ranger une nouvelle boite de médicament et permettre de déterminer l'emplacement de la boite à sortir dudit module de stockage lors d'une demande de délivrance de cette boîte.

11. Dispositif selon les revendications 9 et 10, dans lequel ledit ordinateur de contrôle et de gestion dispose en mémoire d'une seconde base de données pour mémoriser la référence des produits se trouvant dans les boîtes, le nom du produit se trouvant dans chaque boîte ainsi que les trois dimensions de ladite boîte.

12. Dispositif selon l'une des revendications 1 à 11, dans lequel l'introduction des boîtes parallélépipédiques dans ledit moyen de chargement (10) se fait par l'intermédiaire d'une cartouche de chargement (13) de forme en V comportant deux plans principaux (14, 16) et une arête (17) ayant les mêmes dimensions que ladite première partie dudit moyen de chargement (20).

13. Procédé de stockage dans un module de stockage à rangées traversantes parallèles et de délivrance de boîtes parallélépipédiques comportant :
- une étape de chargement (20) des boîtes dans le dispositif,
- une étape de placement de chaque boîte reçue par le moyen de chargement à un emplacement déterminé d'une des rangées et
- une étape d'enregistrement dans une mémoire de l'emplacement où se trouve ladite boîte,
- une étape de sélection d'une boîte déterminée comportant une étape de recherche en mémoire de l'emplacement de ladite boîte déterminée et une étape de saisie et de transport de ladite boîte, et
- une étape de délivrance des boîtes à l'extérieur du dispositif,
ladite étape de placement et ladite étape de saisie et de transport mettant en oeuvre un premier robot (56-1, 56-2, 57, 58, 59) et un second robot (66, 67, 68, 69) situés de part et d'autre du module de stockage, chacun le long de l'une des faces dudit module de stockage où débouchent l'une des extrémités des rangées, **caractérisé en ce que** au moins un desdits robots est commandé pour pousser les boîtes de la rangée où se trouve ladite boîte à délivrer et l'autre desdits robots étant commandé pour recevoir ladite boîte à délivrer et la placer dans ledit moyen de délivrance
lesdits premier et second robots se déplaçant de manière à ce que des pinces (59, 69) de chacun desdits robots soient positionnées face à face et alignées sur la boîte parallélépipédique déterminée, l'une des pinces saisissant une boîte et l'autre pince poussant ladite boîte dans la rangée.

14. Procédé selon la revendication 13, qui comporte une étape de replacement au cours de laquelle le robot du moyen de saisie place chaque boîte poussée par l'autre robot qui n'est pas la boîte déterminée dans une autre rangée.

15. Procédé selon l'une des revendications 13 ou 14, qui comporte une étape de sélection de la pince pour saisir la boîte, ladite pince pour saisir la boîte étant la pince (59 ou 69) qui se trouve être, entre les deux pinces, la plus proche de la boîte parallélépipédique déterminée.

## Patentansprüche

1. Vorrichtung (40) zur Lagerung und Ausgabe von parallelepipedförmigen Schachteln (100) umfassend:
- ein Mittel zum Beladen (10, 12, 20) der Schachteln in die Vorrichtung,
- ein Lager-Modul (50) mit durchgängigen parallelen Reihen zur Lagerung der Schachteln,
- ein Mittel zur Platzierung (54 bis 59, 64 bis 69) einer jeden aus der Beladevorrichtung kommenden Schachtel an einer bestimmten Stelle einer der Reihen und
- ein Software-Programm zur Aufzeichnung und Speicherung des Standortes einer bestimmten Schachtel,
- ein Mittel zur Ausgabe (91, 12, 95) der Schachteln außerhalb der Vorrichtung,
- ein Mittel zur Auswahl einer bestimmten Schachtel umfassend ein Software-Programm zur Suche des Standortes einer bestimmten Schachtel im Speicher und
ein Mittel zur Ergreifung und Beförderung (54 bis 59, 64 bis 69) dieser Schachtel zu der Ausgabevorrichtung und
- ein Mittel zur Steuerung der Platzierung und des Mittels zur Ergreifung und Beförderung,
wobei dieses Mittel zur Platzierung und dieses Mittel zur Ergreifung und Beförderung einen ersten Roboter (56-1, 56-2, 57, 58, 59) und einen zweiten Roboter (66, 67, 68, 69) umfassen, die an beiden Seiten des Lager-Moduls angeordnet sind, jeweils entlang einer der Seiten des Lager-Moduls, an der eine der Reihen des Lager-Moduls endet, wobei das Mittel zur Steuerung dazu ausgelegt ist,
mindestens einen der bezeichneten Roboter zu steuern, um die Schachteln der Reihe zu schieben, in der sich die auszugebende Schachtel befindet, und
den anderen der bezeichneten Roboter zu steuern, um die auszugebende Schachtel entgegen zu nehmen und in die bezeichnete Ausgabe-Vorrichtung zu setzen;
**dadurch gekennzeichnet, dass** der bezeichnete erste und zweite Roboter jeweils über Greifzangen (59, 69) verfügen und dass dieser erste und zweite Roboter dafür geeignet sind, sich unter der Steuerung des bezeichneten Mittels zur Steuerung zu bewegen, derart, dass die Greifzangen (59, 69) eines jeden der bezeichneten Roboter einander gegenüber positioniert und auf die bestimmte parallelepipedförmige Schachtel ausgerichtet sind, wobei eine der Zangen als Ausgabe-Zange dient und die andere Zange als Schub-Zange, um die Schachteln in der Reihe zu schieben.

2. Vorrichtung nach Anspruch 1, bei der das Mittel zur Steuerung den Ersatz durch den Roboter für die Ergreifung und Beförderung steuert, und zwar einer jeden durch den anderen Roboter, den Roboter für die Platzierung, in einer anderen Reihe als der Reihe, in der die geschobene Schachtel ergriffen wurde, geschobenen Schachtel, die nicht die bestimmte Schachtel ist.

3. Vorrichtung nach einem der Ansprüche 1 oder 2, bei der das Mittel zur Platzierung dazu ausgelegt ist, jede von dem Mittel zum Beladen erhaltene Schachtel in einer Reihe einzuordnen, die nicht vollständig mit Schachteln gefüllt ist und deren Öffnung mindestens so groß wie die Schachtel, aber gleichzeitig möglichst klein ist, um den Raum für die Medikamentenschachteln zu optimieren und Reihen mit Schachteln von möglichst gleichem Format zu bilden, um Reihen mit Schachteln homogener Größe zu bilden und möglichst wenig ungenutzten Raum zwischen den Reihen entstehen zu lassen.

4. Vorrichtung nach einem der Ansprüche 1 bis 3, bei der die bezeichnete Ausgabe-Zange, die durch das Mittel zur Steuerung bestimmt wird, die Zange (59 oder 69) ist, die sich der bestimmten parallelepipedförmigen Schachtel am nächsten befindet.

5. Vorrichtung nach einem der Ansprüche 1 bis 4, bei der die Schub-Zange (59 oder 69), durch das Mittel zur Steuerung gesteuert wird, um die betreffende Schachtelreihe über eine Länge zu schieben, die gleich der Länge der zu ergreifenden Schachtel zu der Ausgabe-Zange ist, wobei letztere die Schachtel mit ihren beiden Greifarmen (72, 73) ergreift und sich vor einem Ausgabe-Modul (60), das das bezeichnete Mittel zur Ausgabe umfasst, zu positionieren.

6. Vorrichtung nach einem der Ansprüche 1 bis 5, bei der mindestens ein Roboter, der dazu ausgelegt ist, Schachteln zu schieben, ein flexibles Band (74) umfasst, das an seinem freien Ende mit einem Anschlag (75) versehen ist, das die Schubkraft auf die bezeichnete Schachtel ausübt.

7. Vorrichtung nach Anspruch 6, bei dem das Band (74) zwischen zwei gegeneinander gedrückt gehaltenen und durch einen Motor in Bewegung versetzten Antriebsrollen (76, 77) angeordnet ist.

8. Vorrichtung nach einem der Ansprüche 1 bis 7, bei der jeder der bezeichneten ersten und zweiten Roboter eine Zange (59) umfasst, die aus einer Trägerplatte (71) besteht, um die Schachtel zu stützen, und aus zwei Greifarmen (72, 73), um die bezeichnete Schachtel zu halten.

9. Vorrichtung nach einem der Ansprüche 1 bis 8, bei der das Mittel zur Ergreifung unter anderem Mittel zum Lesen der auf einer der Seiten jeder in das Mittel zum Beladen aufgedruckten Informationen umfasst, wobei das Software-Programm zur Aufzeichnung dafür ausgelegt ist, die in den ausgelesenen Informationen enthaltenen Daten dem gespeicherten Standort der bezeichneten Schachtel zuzuordnen.

10. Vorrichtung nach einem der Ansprüche 1 bis 9, die unter anderem einen Computer zur Kontrolle und Verwaltung des Systems umfasst, der im Speicher eine erste Datenbank enthält, die die Position einer jeden Medikamentenschachtel speichert, die in jedem Gestell des Lager-Moduls (50) eingeordnet ist, um gleichzeitig zu wissen, welche Räume zur Verfügung stehen, um eine neue Medikamentenschachtel einzuführen und einzuordnen, und in der Lage zu sein, den Standort einer Schachtel zu bestimmen, die auf Anforderung dieser Schachtel aus dem Lager-Modul zu entnehmen ist.

11. Vorrichtung nach den Ansprüchen 9 und 10, bei der der Kontroll- und Verwaltungscomputer im Speicher eine zweite Datenbank enthält, die die Sachnummer der Produkte speichert, die sich in den Schachteln befinden, den Namen des Produkts, der sich auf jeder Schachtel befindet, sowie die drei Dimensionen der bezeichneten Schachtel.

12. Vorrichtung nach einem der Ansprüche 1 bis 11, bei der die Einführung der parallelepipedförmigen Schachteln in das bezeichnete Mittel zum Beladen (10) anhand einer V-förmigen Beladekassette (13) mit zwei Hauptebenen (14, 16) und einer Rippe (17) erfolgt, die über die gleichen Abmessungen wie der bezeichnete erste Teil des bezeichneten Mittels zum Beladen (20) verfügt.

13. Lagerverfahren in einem Lager-Modul mit durchgängigen parallelen Reihen zur Ausgabe von parallelepipedförmigen Schachteln umfassend:
- einen Schritt zum Beladen (20) der Schachteln in die Vorrichtung,
- einen Schritt zur Platzierung einer jeden aus der Beladevorrichtung kommenden Schachtel an einer bestimmten Stelle einer der Reihen und
- einen Schritt zur Aufzeichnung und Speicherung des Standortes einer bestimmten Schachtel,
- einen Schritt zur Auswahl einer bestimmten Schachtel, der einen Schritt zur Suche des Standorts der bezeichneten bestimmten Schachtel im Speicher umfasst und einen Schritt zur Ergreifung und Beförderung der bezeichneten Schachtel, und
- einen Schritt zur Ausgabe der Schachteln außerhalb der Vorrichtung,
wobei der bezeichnete Schritt zur Platzierung und der bezeichnete Schritt zur Ergreifung und Beförderung einen ersten Roboter (56-1, 56-2, 57, 58, 59) und einen zweiten Roboter (66, 67, 68, 69) in Anspruch nehmen, die an beiden Seiten des Lager-Moduls angeordnet sind, jeweils entlang einer der Seiten des Lager-Moduls, an der eine der Reihen des Lager-Moduls endet,
**dadurch gekennzeichnet, dass** mindestens einer der bezeichneten Roboter derart gesteuert wird, dass er die Schachteln der Reihe schiebt, in der sich die bezeichnete Schachtel befindet, die auszugeben ist, und der andere Roboter derart gesteuert wird, dass er die auszugebende Schachtel aufnimmt und in das bezeichnete Mittel zur Ausgabe setzt,
wobei sich der bezeichnete erste und zweite Roboter derart bewegen, dass die Greifzangen (59, 69) jedes der bezeichneten Roboter einander gegenüber positioniert und auf eine bestimmte parallelepipedförmige Schachtel ausgerichtet sind, wobei eine der Zangen die Schachtel ergreift und die andere Zange die bezeichnete Schachtel in der Reihe schiebt.

14. Verfahren nach Anspruch 13, umfassend einen Schritt des Ersatzes, während dessen der Roboter des Mittels für die Ergreifung jede durch den anderen Roboter geschobene Schachtel, die nicht die bestimmte Schachtel ist, in eine andere Reihe setzt.

15. Verfahren nach einem der Ansprüche 13 oder 14, umfassend einen Schritt der Auswahl der Zange für die Ergreifung der Schachtel, wobei die bezeichnete Zange zur Ergreifung der Schachtel (59 oder 69) diejenige ist, die von den beiden Zangen der parallelepipedförmigen Schachtel am nächsten ist.

## Claims

1. Device (40) for storing and delivering parallelepiped boxes (100) that comprises:
- a means of loading (10, 12, 20) boxes into the device;
- a storage module (50) with parallel through rows for storing the boxes;
- a means of placing (54 to 59, 64 to 69) each box received by the loading means at a determined location of one of the rows; and
- a software means of recording in a memory the actual location of said box;
- a means of delivering (91 to 95) boxes outside of the device;
- a means of selecting a specified box comprising:
- a software means of searching in a memory for the actual location of said specified box; and
means of picking and of transporting (54 to 59, 64 to 69) said box towards the delivery means; and
- a means of controlling the placement means and the picking and transporting means;
said placement means and said picking and transporting means comprising a first robot (56-1, 56-2, 57, 58, 59) and a second robot (66, 67, 68, 69) located on either side of the storage module, each of them along one of the sides of said storage module where one of the extremities of the storage module's rows ends, with the control means being designed:
to command at least one of said robots to push the boxes in the row where said box to be delivered is located; and
to command the other of said robots to receive said box to be delivered and to place it in said delivery means;
**characterized in that** said first and second robots each comprise claws (59, 69) and **in that** the first and second robots are designed to move under the control of said control means in such a way that the claws (59, 69) of each of said robots are positioned face-to-face and aligned with the specified parallelepiped box, one of the claws serving as delivery claw and the other claw serving as pushing claw so as to push the boxes in the row.

2. Device according to claim 1, wherein the control means commands the picking and transporting robot to replace each box that is pushed by the other - placement - robot and that is not the specified box, into a row other than that where said pushed box was picked.

3. Device according to one of claims 1 or 2, wherein the placement means is designed to stow each box received by the loading means in a row that is not full of boxes, whose opening is at least as large as the box but the smallest possible so as to optimize the space for the medicine boxes, and to form rows of boxes substantially identical in format so as to form rows that are uniform in size and consequently to leave the least possible unused space between the rows.

4. Device according to one of claims 1 to 3, wherein said delivery claw determined by the control means is the claw (59 or 69) which is closest to the specified parallelepiped box.

5. Device according to one of claims 1 to 4, wherein the push claw (59 or 69) is controlled by said control means to push the row of boxes in question towards said delivery claw for a length equal to the length of the box to be picked, the latter gripping the box by means of its two claw arms (72, 73) and positioning itself in front of a delivery module (90) incorporating said delivery means.

6. Device according to one of claims 1 to 5, wherein at least one robot designed to push boxes comprises a flexible band (74), fitted with a stop (75) at its free extremity, exerting the push force on said box.

7. Device according to claim 6, wherein the band (74) is placed between two drive rollers (76, 77) kept pressed against each other and driven by a motor.

8. Device according to one of claims 1 to 7, wherein each of said first and second robots comprise a claw (59) consisting of a carrier tray (71) to carry a box and of two pincer arms (72, 73) to hold said box.

9. Device according to one of claims 1 to 8, wherein the loading means also comprises means of reading pieces of written information on one of the sides of each box introduced into the loading means, with the software recording means being designed to associate data items representative of the information read with the memorized location of said box.

10. Device according to one of claims 1 to 9, also comprising a computer for controlling and managing the system with a first database in memory memorizing the location of each box of medicines stored on each shelf of said storage module (50) so as to know simultaneously which spaces are available for introducing and stowing a new box of medicines and to make it possible to determine the location of the box to be retrieved from said storage module upon a request to deliver that box.

11. Device according to claims 9 and 10, wherein said control and management computer has a second database in memory to memorize the reference data of the products located in the boxes, with the name of the product located in each box as well as the three dimensions of said box.

12. Device according to one of claims 1 to 11, wherein introducing the parallelepiped boxes into said loading means (10) is carried out by means of a V-shaped loading cartridge (13) comprising two principal planes (14, 16) and an edge (17) with the same dimensions as said first part of said loading means (20).

13. Method of storing parallelepiped boxes in a storage module with parallel through rows and of delivering parallelepiped boxes, comprising:
- a step of loading (20) boxes into the device;
- a step of placing each box received by the loading means at a determined location of one of the rows; and
- a step of recording the location of said box in a memory;
- a step of selecting a specified box comprising a step of searching in memory for the location of said specified box and a step of picking and transporting said box; and
- a step of delivering boxes outside of the device;
said placement step and said picking and transporting step utilizing a first robot (56-1, 56-2, 57, 58, 59) and a second robot (66, 67, 68, 69) located on either side of the storage module, each along one of the sides of said storage module where one of the extremities of the storage module's rows ends,
**characterized in that** at least one of said robots is commanded to push the boxes in the row where said box to be delivered is located and the other of said robots is commanded to receive said box to be delivered and to place it in said delivery means;
said first and second robots moving such that each of said robots' claws (59, 69) are positioned face-to-face and aligned on the specified parallelepiped box, with one of the claws picking the box and the other claw pushing said box within the row.

14. Method according to claim 13, which comprises a replacement step, during which the picking means robot places each box pushed by the other robot and which is not the specified box, into another row.

15. Method according to one of claims 13 and 14, which comprises a step of selecting the claw to pick the box, said claw to pick the box being the claw (59 or 69) which is the closest, of the two claws, to the specified parallelepiped box.
